# EUROPEAN PATENT SPECIFICATION

(11) **EP 1 209 379 B1**
(45) Date of publication and mention of the grant of the patent: **11.08.2004**
(21) Application number: 02002657.1
(22) Date of filing: 30.06.1995
(51) Int. Cl.: F16D 67/00

(54) **Normally closed brake**
Normal angelegte Bremse
Frein normalement serré

(30) Priority: 02.07.1994 CN 94111061; 28.06.1995 CN 95106603
(43) Date of publication of application: 29.05.2002
(62) Divisional of application: 95923172.1
(73) Proprietor: Xie, Xingyun, Changsha Hunan Province 410013 (CN)
(72) Inventor: Xie, Xingyun, Tongzipo Changsha, Hunan 410013 (CN)
(74) Representative: MacDougall, Donald Carmichael

(56) References cited:
- DE-C- 833 363
- US-A- 1 808 008
- US-A- 1 855 057
- US-A- 2 573 939
- US-A- 2 783 861
- US-A- 3 994 376
- STAHL UND EISEN, vol. 92, no. 15, 20 July 1972 (1972-07-20), XP002055005 DÜSSELDORF

## Description

### FIELD OF THE INVENTION

The invention relates to a mechanical normally closed braking apparatus for use on retarding moving bodies. Said normally closed braking apparatus herein is referred to, when the driving member and the driven member are in static state, the braking apparatus retains braking from beginning to end.

### BACKGROUND OF THE INVENTION

Existing brakes, no matter mechanically powered, electromagnetic, or electromagnetic hydraulic devices, all of them require rather complicated, energy consumable power producers. For instance, the present normally closed brake demands additional power producer delivering external force to relieve normally closed braking. Cite the electromagnetic clutched brake for another example, its normally closed state is using spring force for braking in body when the body has to run or rotate, the electromagnet must be energized to produce electromagnetic force against the spring force to relieve normally closed braking.

At April 26, 1989, Gazette of Patent for Chinese Invention disclosed a patent entitled "Braking apparatus employing the brake force transformed from the inertial force", with application number 87102097. In which the braking apparatus comprises additional power producer, servo mechanism, brake mechanism, reinforcement mechanism, and the main external braking force is converted from the inertial force resulted in the retarding body in movement. This apparatus has the features of short braking time, fast release and working reliability, however additional power producer is still required to provide brake operating force in normal kinematic state, and certain amount of energy shall be consumed in the operation of additional power producer.

US Patent No. 2,783,861 discloses a brake mechanism having a driving member, a driven member, a floating brake member, a brake disc and cam means. When power is supplied to the driving member, the cam means acts to disengage the floating brake member from the brake disc, allowing the driven member to be driven by the driving member.

In view of the previous facts, the invention is the further development and major improvement of current technology including the aforesaid patent, wherein proposed an apparatus having compact structure, enables to achieve braking or release braking without additional power in normal operation or static state.

Another object of the invention lies in proposal of an apparatus which can apply braking or release braking using emerged relative movement in the time interval after starting and ending transmission between the driving member and the driven member.

A further object of the invention lies in proposal of an apparatus achieving braking or releasing braking employing the concave-convex mating surface of the connecting mechanism between the driving member and the driven member.

### CONTENT OF THE INVENTION

The above objects are realised by the mechanical assembly of claim 1. Further prefered features and embodiments are described in the dependent claims.

Objects and advantages of the present invention will be further clarified via following attached drawings and explanation of the embodiments.

### BRIEF DESCRIPTION OF THE DRAWINGS

FIG. 1 is a cross-section view of the first embodiment of the invention taken along the A-A line in FIG. 2, illustrating the structure of the sliding pin, sliding hole and connecting rod;
FIG. 2 is a cross-section view taken along the B-B line in FIG. 1;
FIG. 3 is an axial-section view of the force-switching mechanism;
FIG. 4 is a cross-section view taken along the G-G line in FIG. 3;
FIG. 5 is an exploded view of the concave-convex mating surface of the acting block and driving block;
FIG. 6 is cross-section view of the second embodiment of the invention taken along the C-C line in FIG. 7;
FIG. 7 is a cross-section view taken along the D-D line in FIG. 6;
FIG. 8 is a cross-section view of the compensation system taken along the E-E line in FIG. 6;
FIG. 9 is a cross-section view of the compensation system taken along the F-F line in FIG. 6;
FIG. 10 is an axial-section view of the third embodiment of the invention;
FIG. 11 is a top view of the invention applied in the reduction gear;
FIG. 12 is a cross-section view taken along the M-M line in FIG. 11;
FIG. 13 is a cross-section view taken along the N-N line in FIG. 11
FIG. 14 is an axial-section view of the fifth embodiment of the invention;
FIG. 15 is an axial-section view of the sixth embodiment of the invention;
FIG. 16 is a cross-section view of the seventh embodiment of the invention;
FIG. 17 is a cross-section view taken along the K-K line in FIG. 16;
FIG. 18 is a cross-section view taken along the H-H line in FIG. 16;
FIG. 19 is the eighth embodiment of the invention;

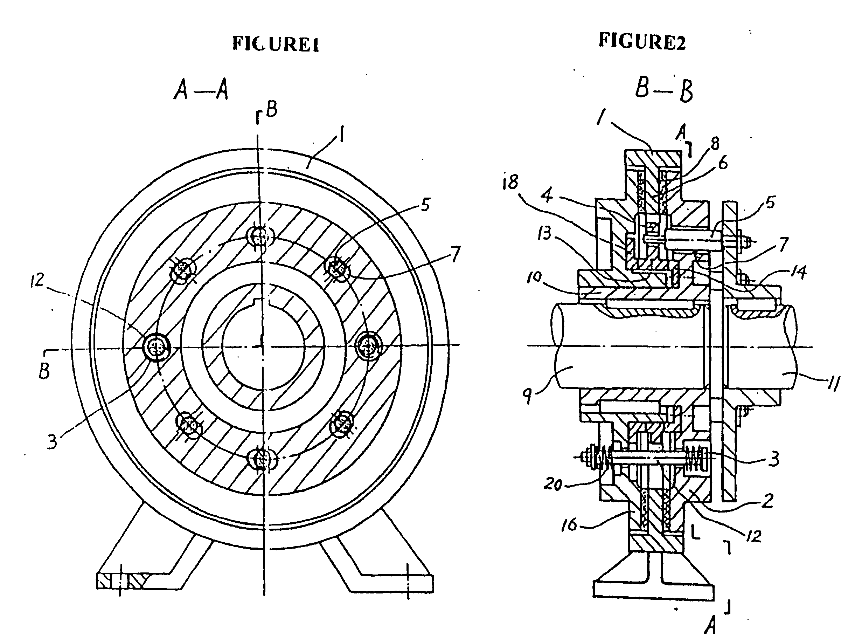

FIG. 1 to FIG. 5 illustrate the first embodiment of the invention.

### THE PREFERRED REALIZATION MODE OF THE INVENTION

The normally closed brake of embodiment 1 of the invention comprises the fixed seat 1, the braking part 2, tripping spring 3, force switching mechanism 4, driven member 9, driving member 11, its structure and interconnection relation are as follows:

The brake shoe 6 is installed on the fixed seat 1 (the two merged into a whole), the braking friction surface 8 of the braking part 2 may be a flat surface or conical surface, clutching with the friction surface of the brake shoe 6 thereby to realize or release braking. FIG. 2 shows the close contact state of the friction surface of the brake shoe 6 and the friction surface of the braking part, i. e. in braking state.

On the braking part 2, sliding hole 7 taken along the circular arc direction and the axle sleeve 10 of the driven member in use of connecting the passive driven member 9 are installed, the sliding hole 7 has certain length taken along the circular arc direction. Since the braking part 2 and the axle sleeve 10 merged into a whole, therefore when the braking part 2 and the brake shoe 6 are in braking state via close contact, braking of the passive driven member 9 is realized via axle sleeve 10, and through mating of the axle sleeve and driven member 9, the braking part 2 is slidable taken along axial direction relative to the driven member 9.

One end of the connection rod is mounted on the braking part 2, the spring 3 is mounted on that end of the connecting rod, its spring force exerted on the braking part 2. When the brake is in braking state, via the action of the spring 3, the braking part 2 imposes close contact to the brake shoe 6 (the action of the brake shoe 6 and the spring 20 to be stated hereafter).

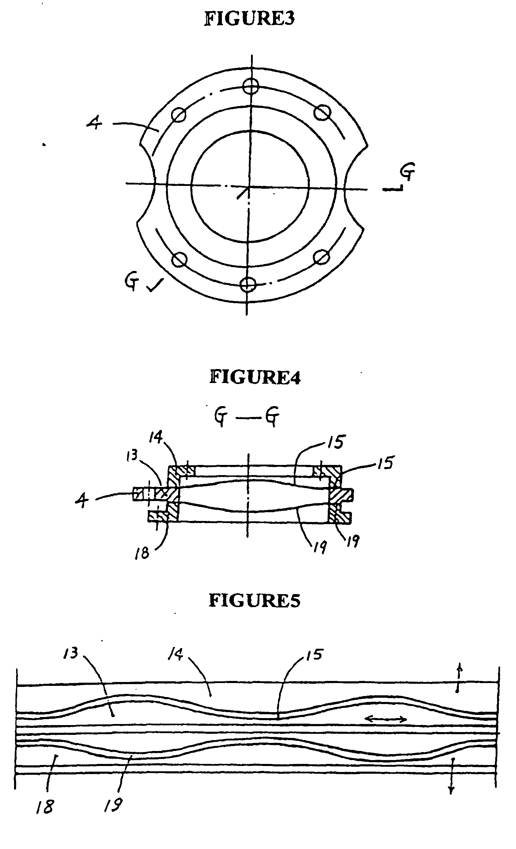

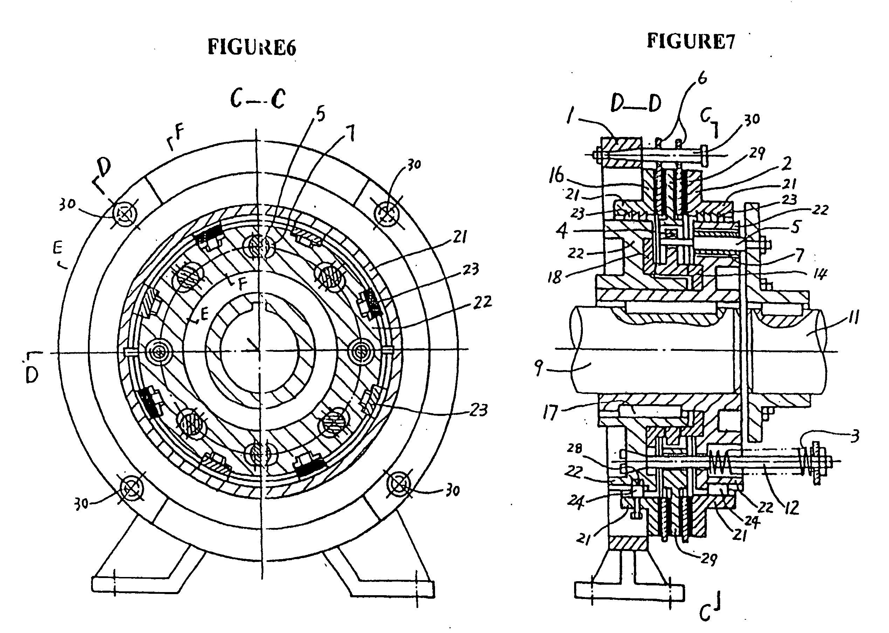

The force switching mechanism 4 comprises the acting block 13 connected with the driving member 11 and the driven block 14 secured with the braking part 2 (refer to FIG. 3 to FIG. 5). The contact surface of the acting block 13 and driven block 14 is the concave-convex mating contact surface 15 (equivalent to the driven member of the cam mechanism also having cam surface). When the driving part acquired active force, it sets the acting block into rotation, the cam segment whereupon moves towards the cam of the driven block 14 and exert a thrust on the driven block 14, brings the driven block 14 into axial movement (as shown by the arrow in FIG. 5), thereby taking the driven member 2 against the acting force of the spring 3 to move outwards, as a result, the braking friction surface of the braking part 2 to be separated from the brake shoe 6 and release braking.

The sliding pin 5 is located in the sliding hole of the braking part 2, one end is connected with the driving member 11, another end is matching with the acting block 13 of the force switching mechanism 4 (see FIG. 1) The sliding pin is movable relative to the sliding hole therein. By means of the displacement of the sliding pin 5 emerged in the sliding hole 7, set the acting block 13 into rotation, then the braking part 2 shall be driven to move via me driving block 14.

The invention relieves normally closed braking, the process taking the passive driven member 9 into normal movement is: When the driving member 11 is started by an active element like a motor and beginning to run, the driving member 11 obtained active force and then start to rotate and brings the sliding pin 5 into displacement in sliding hole 7, thus another end of the sliding pin 5 sets the acting block 13 of the force switching mechanism into rotation, then the acting block 13 exert a thrust on the driven block 14, using the driven block 14 to move braking part 2 outwards and gradually relieve braking, when the braking is not yet completely relieved, the passive driven member 9 still retain static state. When the sliding pin 5 displaced to one end of the sliding hole 7, braking is completely relieved. At present, the sliding pin 5 acts as the transmitting axis of the torque to bring the braking part 2 into rotation, then the passive driven member 9 in the axle sleeve 10 of the braking part will start normal movement. Specifically, using the lead time between the first rotation of the driving member 11 and the temporal static state of the driven member 9, through the displacement of the sliding pin 5 in the sliding hole 7, brings the acting block 13 into rotation, enables the driving block 14 to move the braking part 2 outwards and relieve braking. When the braking is completely relieved, the passive driven member run normally, the acting block 13 of the force switching mechanism turn by the action of the sliding pin 5, due to the restriction of the position of the sliding hole 7, ensure the convex segment on the acting block 13 to contact with the convex segment reliably, to retain the relieving state of braking.

The process of recovering normally closed braking state is, when braking is needed, cut off the power source of the driving component (like a motor), because of the loss in active force, the driving member 11 decelerated due to the reaction torque relative to running, then the sliding pin 5 makes a reverse displacement relative to starting in the sliding hole 7, thus brings the acting block 13 into a relevant reverse rotation, makes the convex segment of the acting block 13 to move towards the concave surface segment on the driving block 14, until the thrust between the acting block and the driving block canceled. Since the tripping spring 3 exerted on the braking part 2, therefore the braking part 2 hold down by the spring 3 to contact the brake shoe 6, a friction resistance emerged to stop the movement of the braking part 2, the passive driven member 9 connected to the braking part 2 and axle sleeve 10 retards correspondingly, i. e. realized braking.

It should be reminded that, the above-mentioned description only relates to the mating situation of an axial flank of the acting block 13 as the acting surface matching with the cam acting surface of the driving block 14, however, actually it is a mating structure of the acting block 13 fitting with the two driving blocks 14 and 18 as shown in FIG. 1 to FIG. 5 (refer to the lower part of the acting block in FIG. 5), not only the braking part 2, but also another braking part 16 exists in the structure. As a matter of fact, the braking part 16 may not be installed in this embodiment, as can be known from the previous description, generally the action of a braking part 2 is adequate, a simple plate may be replaced on the position of the braking part 16, while the other end of the connecting rod 12 may be connected to the plate. Hereafter the second embodiment of the invention shall be described in detail for the structure with the braking part 16. (Another driving block 18 contact surface 19 and the tripping spring 20 are shown in FIG. 4 as follows).

It should also be reminded that, the interconnection relation of the driven member and driving member in the embodiment is actually equivalent to an elastic coupling.

The second embodiment of the invention is shown in FIG. 6 to FIG. 9, in which the same or similar parts in the above-mentioned embodiment are scaled out in the same labels.

A braking part 16 corresponding to the braking part 2 is installed on the other side of the brake shoe 6, and the braking friction surface of the braking part 16 corresponds to the clutching of another flank of the brake shoe 6. The another end of the acting block 13 sets up the driving block 18 corresponding to the driving block 14 (refer to FIG. 4, FIG. 5), the convex-concave contact surface 19 of the acting block 13 and the driving block 18 is symmetrical to the contact surface 15. A sliding key 17 is installed between the axle sleeve of the braking part 16 and the axle sleeve of the braking part 2, to bring the two members into their common movement and stopping simultaneously, and the two braking parts are movable relative to each other taken along the sliding key in axial direction. The two ends of the connecting rod are connected to the braking part 2 and braking part 16 respectively, the spring 3 is mounted at the end of the connecting rod 12 on the braking part 2, and the elastic force of the spring exerts on the braking part 2. A spring 20 symmetrical to the spring 3 may be mounted at another end of the connecting rod 12 (refer to FIG. 2), the spring force of the spring exerts on the braking part 16. Moreover, the other end of the connecting rod 12 can also be secured on the braking part 16, the spring 3 acts on the braking part 16 via the connecting rod 12 (see FIG. 7). Friction lining is installed on the braking friction surface of the braking part 2 and braking part 16, in order to be acted evenly, at least two sliding pins 5 and corresponding sliding holes 7 shall be installed and symmetrically uniform distributed, there are 6 sliding holes 7 on the braking part 2 of the embodiment (see FIG. 6), and there are 6 relevant sliding pins 5, in order to be evenly acted upon, at least two connecting rods 12 are used for linking braking parts shall be installed and set up in symmetric homogeneity, there are two tripping springs 3 in the embodiment, two tripping springs 20 may be used or not be installed.

The working process of releasing braking state in the second embodiment of the invention is, acting block 13 turn according to the rotation of the sliding pin 5 in the start of the driving member acquiring active force, and exerts an outward thrust on the driving block 14 and driving block 18 located at the two ends, enables the braking part 2 and braking part 16 to move outwards simultaneously to depart from the brake shoe 6, achieve the relieve of normally closed braking, and result in normal operation of the passive driven member. When the driving member lost the active force, the acting block 13 turn in opposite direction following the sliding pin 5, enables the convex surface segment of the acting block move towards the concave surface segment, cancel the thrust, the tripping spring 3 and tripping spring 20 act on the braking part 2 and braking part 16 respectively, or exert on the braking part 2 and braking part 16 by tripping spring 3 via connecting rod simultaneously, move the two braking parts inwards to make tight contact with the brake shoe 6, and recover normally closed braking state.

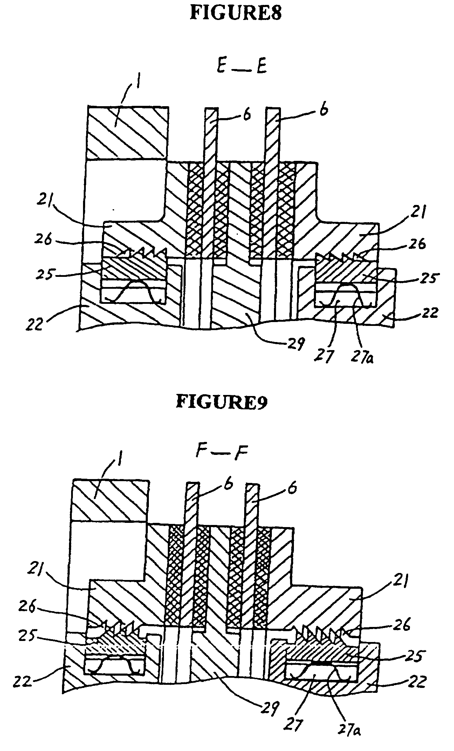

In the embodiment 2, both the braking part 2 and braking part 16 can also be composed by the disc 21 having internal teeth and the core 22, the braking compensation system 23 and a sliding key 24 which enables the disc and core to run and stop simultaneously are installed between the disc 21 and the core 22, the sliding key 24 is also used to ensure balance of the mounting structure of the disc taken along the core. In the embodiment, the brake compensation system on the braking part 2 and the braking part 16 is symmetrically installed. The brake shoe 6 has biplate structure, a slidable connection is achieved by the supporting shaft 30, in addition, in the biplate brake shoe 6, an intermediate inner disc 29 is also installed on the connecting rod 12 to enhance the friction force in braking. The brake compensation system is an improved gear ring structure, i. e.: Gear ring 26 is installed in the inner circle of the disc 21, the tooth block 25 is set up on the circle of the core 22 (refer to FIG. 8, FIG. 9), the tooth block 25 has external teeth mating with the gear ring 26, the outboard of each tooth is a slope, and inside is a vertical plane perpendicular to the axis of the drive shaft. Said gear ring 26 and the tooth block 25 may be flank matched, the spring 28 is installed in the bottom of the sliding key 24, the sliding key 24 may be adjusted by a screw, set the disc 21 and core 22 to turn taken along the thread, to carry out manual adjustment of the friction spacing. The tooth block 25 is set up in the notch 27 formed around the circular direction in the core 22, and the spring 27a exerting on the tooth block 25 is installed in the bottom of the notch 27 (see FIG. 8). The tooth blocks 25 are set up in pairs, there are four pairs with eight blocks in total in the embodiment, in which part of them are partial evenly arranged in pairs (four pairs in the embodiment, which are not blackened in FIG. 6) in complete contact (see FIG. 8). Moreover, homogeneously arranged in pairs ( four blackened in FIG. 6) are in partial contact (see FIG. 9). Complete contact is in working state, i. e. when the core of the braking part is driven by the force switching mechanism and move outwards, the disc is set to move outwards and relieve braking. When the thrust of the force switching mechanism is removed, the tripping spring exerted on the core, make a close contact between the disc and the brake shoe to realize braking. The tooth block having partial contact teeth shall be in compensation state, when the friction lining of the disc are worn out to a certain extent, under the action of the driving block, the core 22 makes a relative movement with respect to the disc 21 in outward movement, the tooth block 25 move downwards in the notch against the action of the spring 27a, and the teeth on the block slip into the next gear ring of the disc, i. e. to be in complete contact turn to working state, and the tooth block originally in complete contact changed to compensation state of partial contact.

It should be emphasized that, said compensation system 23 in the embodiment 2, may be used in other brakes having disc braking parts according to its principle, like the descriptions of the embodiments 3, 4, 5, 6 hereafter.

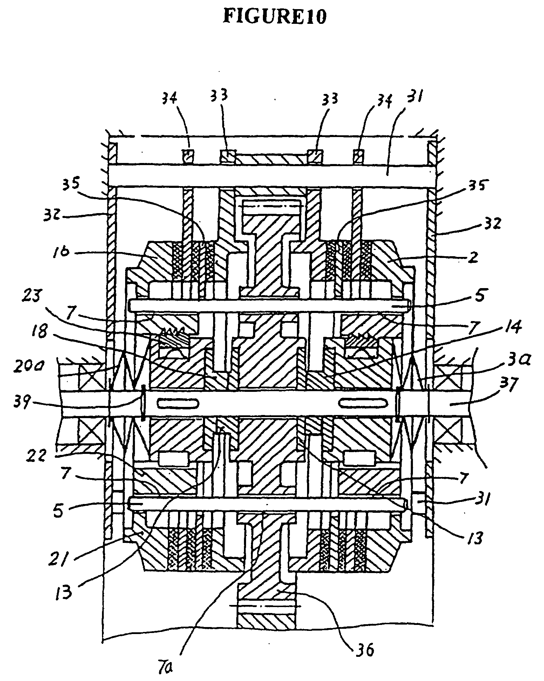

The embodiment 3 of the invention is shown in FIG. 10. Similarly, the same or similar parts with the above-mentioned embodiments are scaled out with the same labels.

FIG. 10 is the cross section view of the axial structure of the embodiment. The embodiment is a variant based on the above-mentioned embodiment. In which the fixed seat comprises of three connecting axes 31 and two side plates 32 connected to the both ends of the three axes. Brake shoe 6 comprises of two discrete discs 33, both are secured on the connecting axle 31, braking part 2 and braking part 16 and the two discrete discs 33 are corresponding to the two discrete discs 33 of the brake shoe 6. Between the braking part 2 and braking part 16 and two discrete discs 33, the brake shoe 34 is connected on the connecting axle 31, and is movable taken along the axle; on the side face of the brake shoe 34, coaxial servo inner disc braking part 35, braking part, brake shoe and the friction surface of the servo inner disc braking part clutched in mutual one-to-one correspondence. Thus said multi-plate double disc structure takes driving part 11 as intermediate wheel. In the embodiment, the intermediate wheel is the drive gear 36, installed between the two discrete discs 33, and suited on the axle 37. The axle 37 is the passive driven member 9, and plays a part in connection as the connecting rod 12 of the braking part. The sliding pin 5 threaded the drive gear 36, brake shoes 2, 16 and the servo inner disc braking part 35, its both ends are located in the sliding holes of the braking part 2 and braking part 16 respectively. The sliding hole 7 may also be modified to fit in coupling with the sliding pin 5, and set up sliding hole 7 on the drive gear 36. The spring 3 and the spring 20 are mounted on the both ends of the axle 37; the acting block 13 in the force-switching mechanism is a two block discrete part, connected to the two end faces of the drive gear 37 respectively. When the driving block 14 and driving block 18 exert driving thrust on the braking part 2 and braking part 16, the two braking parts 2 and 16 overcome the acting forces of the tripping springs 3a and 20a to move outboard, enables the brake shoe 34, servo inner disc braking part 35 to be in a loosen condition without pressure and relieved braking. When the thrust of the driving blocks 14 and 18 canceled, the action comes from the two tripping springs, the braking parts 2 and 16 exert pressure on the servo inner disc braking part 35 and the brake shoe 34, brings them to move inwards, until making mutual close contact and achieve braking.

When the brake release in the embodiment 3, if the acting forces of the tripping springs 3a and 20a are adequate, then the braking parts 2, 16 may be restricted to move in a limiting range, and may also be restricted in position via setting up circles 39, enable them to make limited movement, and ensure the concave-convex surface of the acting block 13 not to pass the convex-concave surface of the driving block 14. No sliding pins and sliding holes are needed to set up in this type of structure, and direct force transmissions are carried out by the acting block 13 and the driving block 14. Same as the description of the embodiment 1, only the braking part 2, and no braking part 16 is installed.

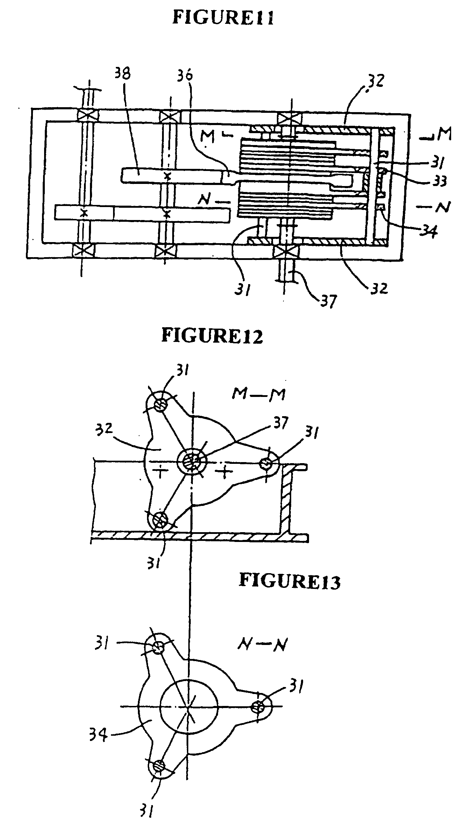

The fourth embodiment is shown in FIG. 11 - FIG. 13, in which the same or similar parts in the above-mentioned embodiment are scaled out with the same labels.

This embodiment is the living example of the application of the embodiment 3 in reduction gears, relevant connecting mechanism refer to FIG. 1 to FIG. 13. The two side plates 32 are connected to the two inwalls of the reduction gear box respectively, transmission gear 36, i. e. the driving member, is engaged with the fore drive gear 38, and the passive driven member is the output transmission shaft 37. Concerning the connecting axle 31, the discrete disc 33 and the brake 34 in the drawings are the same with the embodiment 3, and shall not repeat herein.

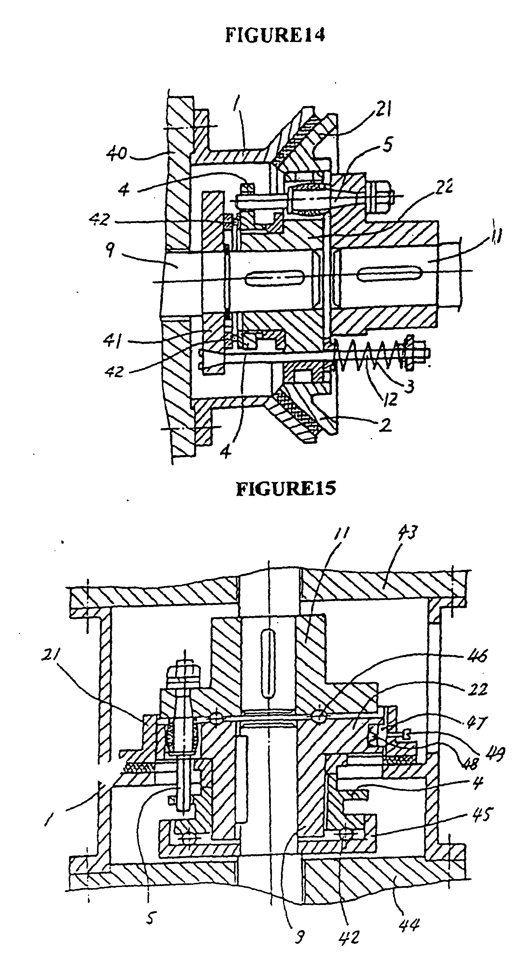

The fifth embodiment of the invention is shown in FIG. 14, in which the same or similar parts with the above-mentioned embodiments are scaled out with the same labels.

In the embodiment 5, both friction surfaces of the braking part 2 and the fixed seat 1 are conical surfaces.

The fixed seat 1 is directly secured on the casing (outer shell) of the driven member 40, the braking part 2 having conical friction surface comprising the conical disc 21 and core 22, adopt the same compensation system with the embodiment 2, i. e. the improved gear ring structure (not shown in the figure), one end of the connecting rod 12 linked on an internal dead plate 41, a bearing 42 is mounted between the force switching mechanism 4 and the internal dead plate 41 to reduce the friction force of the force switching mechanism. The remaining members comprise the driving member 11, driven member 9, sliding pin 5 and the spring 3, it is unnecessary to go into details.

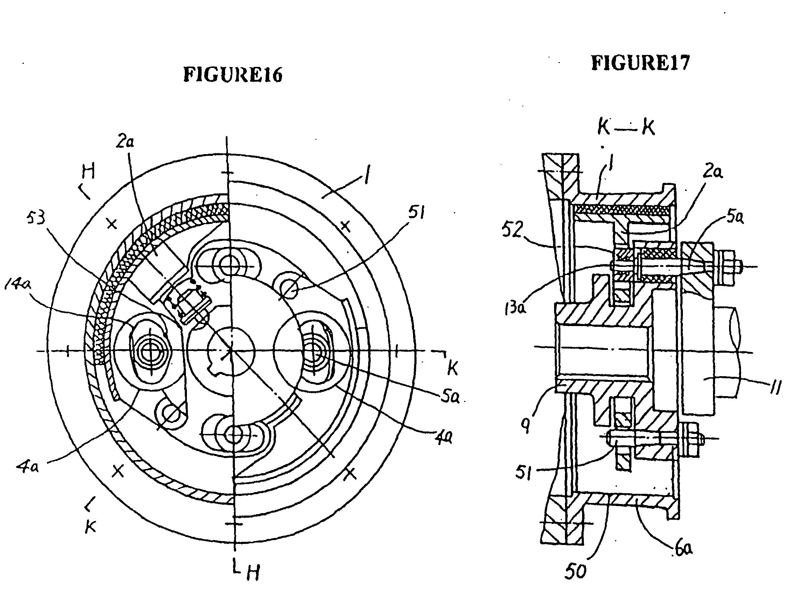

The sixth embodiment of the invention is shown in FIG. 15, in which the same or similar parts are sectioned out in the same labels.

In this embodiment, using the gravity force of the driving member 11 and the driven member 9 (indicates the vertical installation with the driving member on the top) are taken as the acting force and braking force to restrict the limiting displacement of the force switching mechanism, and no connecting rod is needed. The fixed seat is also taken as the coupling member of the upper driving member casing 43, and the lower driven member casing 44, a bearing 42 is mounted between the force switching mechanism 4 and the thrust plate 45, meanwhile a bearing 46 is mounted between the driving member and driven member to reduce friction force. The braking part 2 also comprises the disc 21 and the core 22, the above-mentioned compensation system may be adopted between the disc 21 and the core 22, or employing direct thread mating and set up the key 47 and the spring 48. A screw 49 is installed on the key slot position of the disc 21, when the friction part is worn out, the key 47 is pushed up to the rotatable position by the screw 49, thus the friction gap can be adjusted.

The seventh embodiment of the invention is shown in FIG. 16 - FIG. 18. In that embodiment, the same or similar parts in action are scaled out with the same labels.

The structure of this embodiment is different from the above-mentioned embodiment, in which the force switching mechanism transformed the active force into radial force against the brake acting force of the spring to relieve braking. The fixed seat 1 may be secured on the casing of the driven member, and enabled to be secured on other positions. The inside of the fixed seat 1 play a part in the brake shoe, and labeled 6a in the diagram. The cylindrical surface on the brake shoe 6a is a braking friction surface, called the braking cylindrical surface 50, the form of the braking part is a hoof block 2a, and is articulated on the driven member 9 by the support pin 51. The action of the acting block 13a in the radial force switching mechanism 4a is served by the front end of the sliding pin 5a The acting surface of the driving block 14a is the mating surface 53 herein, and is directly secured on the hoof block 2a, the driving block 14a and the hoof block 2a may also merge into a whole, which is the situation in this embodiment. In order to reduce the driving friction of the sliding pin 5a, a rolling element is installed at the front end of 5a. In order to avoid producing radial component force between the driving member 11 and driven member 9, the radial force switching mechanism 4a is preferred to be evenly arranged relative to the centre of movement of the moving body. Two part symmetric distribution is adopted in this embodiment. When the driving member acquired active force brings the sliding pin 5a into movement, on which the rolling element suppress the mating surface (see FIG. 16), producing downward radial component force against the acting force of the spring 3a, enables the brake hoof shoe 2a to move inwards taken along radial direction, and release the braking of the braking cylindrical surface, the driving member 11 and the driven member 9 run into normal operation. When the driving part 11 lost the active force, the sliding pin 5a make a reverse movement relative to the mating surface 53, and recover braking under the action of the acting force of the spring 3a.

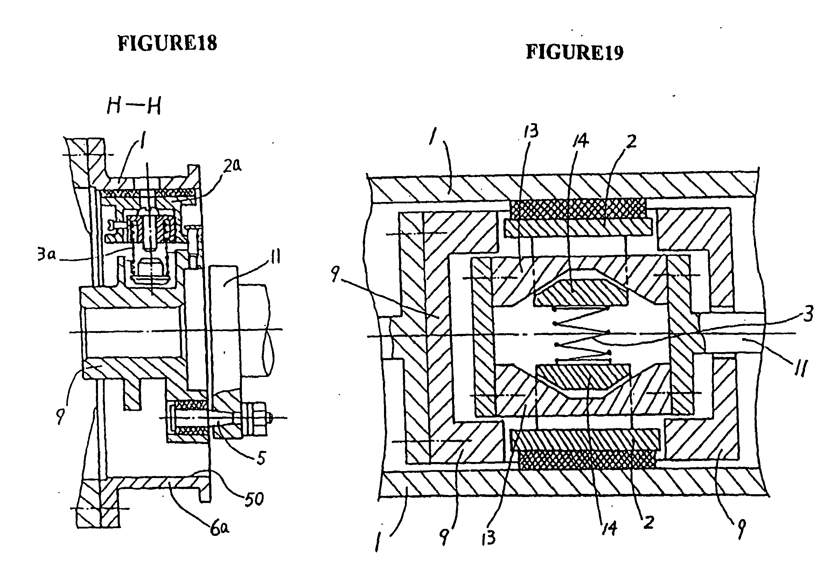

The eighth embodiment of the invention is shown in FIG. 19, in which the driving member brings the driven member into rectilinear movement (i. e. the axial movement of left and right directions in the diagram).

As shown in FIG. 19, the braking part 2 and the driving block 14 merged into a whole, the two braking parts 2 locate in the notch of the two side boards of the driven member 9 respectively, the acting block locates in the notch between the braking part 2 and the driving block 14, the slope of the driving block 14 fit with the slope of the acting block 13, both ends of the spring 3 connect with the inner end of the driving block 14, the friction lining on the outboard side of the braking part 2 clutch with the braking friction surface of the fixed seat 1. When the driving member 11 acquired active force and make rectilinear movement, due to the slope action of the acting block 13, enables the driving block 14 to hold down the spring 3 and move inwards, causes the braking part 2 and the braking friction surface to separate, thereby relieves braking for the driven member 9, and the driven member 9 moves following the driving member 11. When the driving member 11 lost the active force, the spring 3 come into action, the acting block 13 and the braking part 2 merge into a whole to move from inside to outboard, the braking part 2 contact with the braking friction surface and achieve braking for the driven member 9.

The brake in the invention established force switching mechanism in said various relevant structures in the embodiment, using the active force of the driving member against the brake acting force to relieve braking, enables the passive driven member and the driving member to retain normal operation.

In comparison of existing technologies, the brake of the invention has significant substantial features, no additional power setting need to be installed, and the structure is simple, in normal operation process, it is energy saving, reliable in braking, and has extensive range in application. Especially when it is used in mine equipments having explosion-proof requirements, since no additional power setting (like electromagnet etc.) is needed, the work is completely safe and reliable.

The brake of the invention shall have vast application vistas in mining, metallurgical, lifting, architectural and general machinery equipments.

## Claims

1. A mechanical assembly comprising a mechanism located between a driving member (11) and a driven member (9), the mechanism being arranged to allow the driving member (11) to drive the driven member (9) in a first direction when driving power is supplied to the driving member (11), and to function as a brake for both members (11, 9) when driving power is removed from the driving member (11), wherein the mechanism comprises:
a brake shoe (6, 6a) attached to a fixed structure (1);
a braking part (2, 2a) having a friction surface (8) for selectively engaging and disengaging the brake shoe (6, 6a), said braking part (2, 2a) being adapted to retard movement of the driving and driven members (11, 9) in the first direction when engaged with the brake shoe (6, 6a);
an acting block (13, 13a) secured to the driving member (11) and having a cam surface;
a driving block (14, 14a) associated with the braking part and having a cam surface complementary to that of the acting block, the cam surfaces of the acting block (13, 13a) and the driving block (14, 14a) engaging to form a cam mating structure (15, 53),
biasing means for biasing said braking part (2, 2a) towards a braking position wherein the friction surface (8) engages the brake shoe (6, 6a);
wherein initial movement of the driving member (11) in the first direction causes the acting block (13, 13a) to move in a corresponding direction and the cam mating structure (53) to move the braking part (2, 2a) against the bias of the biasing means (3, 3a) to disengage the friction surface (8) from the brake shoe (6), and further movement of the driving member (11) in the first direction results in the driving member and the driven member (11, 9) being directly coupled via one of the braking part (2, 2a) and the acting block (13, 13a);
and wherein removal of the driving power from the driving member (11) causes the driving and driven members (11, 9) to disengaged and the acting block (13, 13a) to be moved in a second opposite direction and remove the effect of the cam mating structure (53) such that the braking part (2, 2a) is moved towards the braking position by action of the biasing means.

2. A mechanical assembly as claimed in claim 1, wherein the first direction is a rotational direction.

3. A mechanical assembly as claimed in claim 1, wherein the first direction is a rectilinear direction.

4. A mechanical assembly as claimed in claim 1, 2 or 3, wherein the biasing means is a spring (3, 3a).

5. A mechanical assembly as claimed in claim 1, 2 or 3, wherein the biasing means is provided by gravitational force acting on the braking part.

6. A mechanical assembly according to any preceding claim, wherein the braking part (2,2a) is rotatably fixed to the driven member (9).

7. A mechanical assembly according to any one of claims 1 to 5, wherein the braking part (2, 2a) is pivotally mounted on the driven member (9).

8. A mechanical assembly according to claim 6 and 7, wherein the driving member (11) is directly coupled to the driven member (9) by way of connector pins (5) fixed to the driving member (11) and engaging an extremity of respective holes (5) defined in the braking part (2, 2a), which braking part is coupled to the driven member (9).

9. A mechanical assembly according to claim 1, wherein the driving member (11) is directly coupled to the driven member (9) by way of engagement of abutting faces of the driving and driven members (11, 9) respectively.

10. A mechanical assembly according to any preceding claim, wherein the friction surface (8) is a conical surface.

11. A mechanical assembly according to any one of claims 1 to 9, wherein the friction surface (8) is a flat surface.

12. A mechanical assembly according to any one of claims 1 to 9, wherein the friction surface (8) is a cylindrical surface.

## Patentansprüche

1. Mechanische Baugruppe, umfassend einen Mechanismus, der zwischen einem Antriebselement (11) und einem angetriebenen Element (9) angeordnet ist, wobei der Mechanismus so konfiguriert ist, dass das Antriebselement (11) das angetriebene Element (9) in einer ersten Richtung antreiben kann, wenn an das Antriebselement (11) eine Antriebskraft angelegt wird, und dass er als eine Bremse sowohl für das Antriebselement (11) als auch das angetriebene Element (9) fungieren kann, wenn die Antriebskraft vom Antriebselement (11) weggenommen wird, wobei der Mechanismus folgendes umfasst:
eine Bremsbacke (6, 6a), die an einer ortsfesten Konstruktion (1) befestigt ist;
einen Bremsabschnitt (2, 2a) mit einer Reibfläche (8) zum selektiven Ineingriffnehmen und Freigeben der Bremsbacke (6, 6a), wobei der Bremsabschnitt (2, 2a) so konfiguriert ist, dass er die Bewegung des Antriebselements (11) und des angetriebene Elements (9) in der ersten Richtung verzögert, wenn er die Bremsbacke (6, 6a) in Eingriff nimmt;
einen Betätigungsblock (13, 13a), der an dem Antriebselement (11) angebracht ist und eine Nockenfläche aufweist;
einen Antriebsblock (14, 14a), der dem Bremsabschnitt zugeordnet ist und eine Nockenfläche aufweist, die der Nockenfläche des Betätigungsblocks komplementär ist, wobei die Nockenfläche des Betätigungsblocks (13, 13a) und die Nockenfläche des Antriebsblocks (14, 14a) einander dergestalt in Eingriff nehmen, dass eine aufeinander abgestimmte Nocken-Konstruktion (15, 53) entsteht;
Vorbelastungsmittel zum Vorbelasten des Bremsabschnitts (2, 2a) in Richtung einer Bremsposition, worin die Reibfläche (8) die Bremsbacke (6, 6a) in Eingriff nimmt;
wobei eine erste Bewegung des Antriebselements (11) in der ersten Richtung bewirkt, dass der Betätigungsblock (13, 13a) sich in eine entsprechende Richtung bewegt und dass die aufeinander abgestimmte Nocken-Konstruktion (53) den Bremsabschnitt (2, 2a) gegen die Vorbelastung des Vorbelastungsmittels (3, 3a) bewegt, um die Reibfläche (8) von der Bremsbacke (6) zu lösen, wobei ein weiteres Bewegen des Antriebselements (11) in der ersten Richtung bewirkt, dass das Antriebselement (11) und das angetriebene Element (9) über den Bremsabschnitt (2, 2a) oder über den Betätigungsblock (13, 13a) direkt gekoppelt werden;
und wobei ein Wegnehmen der Antriebskraft vom Antriebselement (11) bewirkt, dass das Antriebselement (11) und das angetriebene Element (9) voneinander getrennt werden und dass der Betätigungsblock (13, 13a) in eine zweite, entgegengesetzte Richtung bewegt wird und dass der Effekt der aufeinander abgestimmten Nocken-Konstruktion (53) dergestalt aufgehoben wird, dass der Bremsabschnitt (2, 2a) durch die Wirkung des Vorbelastungsmittels in Richtung der Bremsposition bewegt wird.

2. Mechanische Baugruppe gemäß Anspruch 1, wobei es sich bei der ersten Richtung um eine Drehrichtung handelt.

3. Mechanische Baugruppe gemäß Anspruch 1, wobei es sich bei der ersten Richtung um eine geradlinige Richtung handelt.

4. Mechanische Baugruppe gemäß Anspruch 1, 2 oder 3, wobei es sich bei dem Vorbelastungsmittel um eine Feder (3, 3a) handelt.

5. Mechanische Baugruppe gemäß Anspruch 1, 2 oder 3, wobei das Vorbelastungsmittel durch Schwerkraft bereitgestellt wird, die auf den Bremsabschnitt einwirkt.

6. Mechanische Baugruppe gemäß einem der vorangehenden Ansprüche, wobei der Bremsabschnitt (2, 2a) drehbar an dem angetriebenen Element (9) befestigt ist.

7. Mechanische Baugruppe gemäß einem der Ansprüche 1 bis 5, wobei der Bremsabschnitt (2, 2a) schwenkbar an dem angetriebenen Element (9) befestigt ist.

8. Mechanische Baugruppe gemäß den Ansprüchen 6 und 7, wobei das Antriebselement (11) direkt mit dem angetriebenen Element (9) mittels Verbindungsstiften (6) gekoppelt ist, welche an dem Antriebselement (11) befestigt sind und einen äußeren Abschnitt entsprechender Löcher (5) in Eingriff nehmen, die in dem Bremsabschnitt (2, 2a) definiert sind, wobei der Bremsabschnitt mit dem angetriebenen Element (9) gekoppelt ist.

9. Mechanische Baugruppe gemäß Anspruch 1, wobei das Antriebselement (11) direkt mit dem angetriebenen Element (9) mittels der Ineingriffnahme aneinandergrenzender Flächen des Antriebselements (11) bzw. des angetriebenen Elements (9) gekoppelt ist.

10. Mechanische Baugruppe gemäß einem der vorangehenden Ansprüche, wobei es sich bei der Reibfläche (8) um eine konische Fläche handelt.

11. Mechanische Baugruppe gemäß einem der Ansprüche 1 bis 9, wobei es sich bei der Reibfläche (8) um eine flache Fläche handelt.

12. Mechanische Baugruppe gemäß einem der Ansprüche 1 bis 9, wobei es sich bei der Reibfläche (8) um eine zylindrische Fläche handelt.

## Revendications

1. Ensemble mécanique comprenant un mécanisme situé entre un élément d'entraînement (11) et un élément entraîné (9), le mécanisme étant arrangé de manière à permettre à l'élément d'entraînement (11) d'entraîner l'élément entraîné (9) dans une première direction lorsqu'une puissance d'entraînement est fournie à l'élément d'entraînement (11), et à fonctionner comme un frein pour les deux éléments (11, 9) lorsque la puissance d'entraînement est retirée de l'élément d'entraînement (11), dans lequel le mécanisme comprend:
un sabot de frein (6, 6a) attaché à une structure fixe (1);
une partie de freinage (2, 2a) présentant une surface de friction (8) pour engager et désengager d'une façon sélective le sabot de frein (6, 6a), ladite partie de freinage (2, 2a) étant apte à retarder le déplacement des éléments d'entraînement et entraîné (11, 9) dans la première direction lorsqu'elle est engagée avec le sabot de frein (6, 6a);
un bloc d'actionnement (13, 13a) fixé à l'élément d'entraînement (11) et présentant une surface de came;
un bloc d'entraînement (14, 14a) associé à la partie de freinage et présentant une surface de came complémentaire à celle du bloc d'actionnement, les surfaces de came du bloc d'actionnement (13, 13a) et du bloc d'entraînement (14, 14a) s'engageant de manière à former une structure d'accouplement de came (15, 53);
un moyen de poussée pour pousser ladite partie de freinage (2, 2a) en direction d'une position de freinage dans laquelle la surface de friction (8) engage le sabot de frein (6, 6a);
dans lequel un déplacement initial de l'élément d'entraînement (11) dans la première direction entraîne le bloc d'actionnement (13, 13a) à se déplacer dans une direction correspondante, et la structure d'accouplement de came (53) à déplacer la partie de freinage (2, 2a) contre la poussée du moyen de poussée (3, 3a) afin de désengager la surface de friction (8) du sabot de freinage (6), et un déplacement supplémentaire de l'élément d'actionnement (11) dans la première direction a pour conséquence que l'élément d'entraînement et l'élément entraîné (11, 9) sont directement couplés soit via la partie de freinage, (2, 2a) soit via le bloc d'actionnement (13, 13a); et
dans lequel le retrait de la puissance d'entraînement de l'élément d'entraînement (11) provoque le désengagement des éléments d'entraînement et entraîné (11, 9) et le déplacement du bloc d'actionnement (13, 13a) dans une deuxième direction opposée, et supprime l'effet de la structure d'accouplement de came (53), de telle sorte que la partie de freinage (2, 2a) soit déplacée en direction de la position de freinage sous l'action du moyen de poussée.

2. Ensemble mécanique selon la revendication 1, dans lequel la première direction est une direction rotative.

3. Ensemble mécanique selon la revendication 1, dans lequel la première direction est une direction rectiligne.

4. Ensemble mécanique selon la revendication 1, 2 ou 3, dans lequel le moyen de poussée est un ressort (3, 3a).

5. Ensemble mécanique selon la revendication 1, 2 ou 3, dans lequel le moyen de poussée est fourni par la force gravitationnelle agissant sur la partie de freinage.

6. Ensemble mécanique selon l'une quelconque des revendications précédentes, dans lequel la partie de freinage (2, 2a) est fixée d'une façon rotative à l'élément entraîné (9).

7. Ensemble mécanique selon l'une quelconque des revendications 1 à 5, dans lequel la partie de freinage (2, 2a) est montée d'une façon pivotante sur l'élément entraîné (9).

8. Ensemble mécanique selon la revendication 6 et 7, dans lequel l'élément d'entraînement (11) est directement couplé à l'élément entraîné (9) au moyen de broches de connexion (5) fixées à l'élément d'entraînement (11) et engageant une extrémité de trous respectifs (5) définis dans la partie de freinage (2, 2a), ladite partie de freinage étant couplée à l'élément entraîné (9).

9. Ensemble mécanique selon la revendication 1, dans lequel l'élément d'entraînement (11) est directement couplé à l'élément entraîné (9) au moyen d'un engagement des faces de butée des éléments d'entraînement et entraîné (11, 9), respectivement.

10. Ensemble mécanique selon l'une quelconque des revendications précédentes, dans lequel la surface de friction (8) est une surface conique.

11. Ensemble mécanique selon l'une quelconque des revendications 1 à 9, dans lequel la surface de friction (8) est une surface plate.

12. Ensemble mécanique selon l'une quelconque des revendications 1 à 9, dans lequel la surface de friction (8) est une surface cylindrique.
